# EUROPÄISCHE PATENTSCHRIFT

(11) **EP 2 652 363 B1**
(45) Veröffentlichungstag und Bekanntmachung des Hinweises auf die Patenterteilung: **25.02.2015**
(21) Anmeldenummer: 11782576.0
(22) Anmeldetag: 08.11.2011
(51) Int. Cl.: F16H 61/16, F16H 61/68, F16H 61/686

(54) **VERFAHREN ZUM BETREIBEN EINER GETRIEBEVORRICHTUNG EINES FAHRZEUGANTRIEBSSTRANGES**
METHOD FOR THE OPERATION OF A TRANSMISSION DEVICE IN A VEHICLE DRIVE TRAIN
PROCÉDÉ PERMETTANT DE FAIRE FONCTIONNER UN DISPOSITIF DE TRANSMISSION DE LA CHAÎNE CINÉMATIQUE D'UN VÉHICULE

(30) Priorität: 14.12.2010 DE 102010063029
(43) Veröffentlichungstag der Anmeldung: 23.10.2013
(73) Patentinhaber: ZF Friedrichshafen AG, 88038 Friedrichshafen (DE)
(72) Erfinder: MIHATSCH, Georg, 88131 Lindau (DE); ARNOLD, Jörg, 88090 Immenstaad (DE)
(86) Internationale Anmeldenummer: PCT/EP2011/069580
(87) Internationale Veröffentlichungsnummer: WO 2012/079846

(56) Entgegenhaltungen:
- EP-A1- 1 705 406
- EP-A2- 1 767 829
- WO-A1-2010/081820
- DE-A1-102009 002 203

## Beschreibung

Die Erfindung betrifft ein Verfahren zum Betreiben einer Getriebevorrichtung eines Fahrzeugantriebsstranges gemäß der im Oberbegriff des Patentanspruches 1 näher definierten Art.

Aus der DE 10 2005 002 337 A1 ist eine als 8-Gang-Mehrstufengetriebe ausgeführte Getriebevorrichtung mit reibschlüssigen Schaltelementen, wie Lamellenkupplungen und Lamellenbremsen, bekannt. Bei Vorliegen einer Schaltanforderung für einen Übersetzungswechsel in der Getriebevorrichtung ist wenigstens ein reibschlüssiges Schaltelement, welches zur Darstellung der aktuell in der Getriebevorrichtung eingelegten Ist-Übersetzung in den Kraftfluss der Getriebevorrichtung zugeschaltet ist, aus dem Kraftfluss der Getriebevorrichtung abzuschalten, während wenigstens ein weiteres reibschlüssiges Schaltelement, welches während der Darstellung der aktuell in der Getriebevorrichtung eingelegten Ist-Übersetzung aus dem Kraftfluss der Getriebevorrichtung abgeschaltet ist, zur Darstellung der angeforderten Ist-Übersetzung in den Kraftfluss der Getriebevorrichtung zuzuschalten ist.

Dabei wird das über das zur Darstellung der aktuellen Ist-Übersetzung der Getriebevorrichtung in den Kraftfluss zugeschaltete reibschlüssige Schaltelement geführte Drehmoment mit zunehmender Schaltzeit mehr oder weniger von dem zur Darstellung der angeforderten Ziel-Übersetzungen in den Kraftfluss der Getriebevorrichtung zuzuschaltenden reibschlüssigen Schaltelement übertragen, während das über das abzuschaltende Schaltelement führbare Drehmoment abnimmt.

Nachteilhafterweise verursachen reibschlüssige Schaltelemente in geöffnetem Betriebszustand Schleppmomente, welche einen Gesamtwirkungsgrad eines Automatgetriebes in unerwünschtem Umfang beeinträchtigen.

Aus diesem Grund werden Getriebevorrichtungen, wie beispielsweise aus der DE 10 2008 000 429 A1 bekannt, in zunehmendem Umfang neben reibschlüssigen Schaltelementen auch mit formschlüssigen Schaltelementen ausgeführt, in deren Bereich keine den Gesamtwirkungsgrad einer Getriebevorrichtung beeinträchtigende Schleppmomente auftreten.

Aus der gattungsgemäßen WO-A-2010/081820 ist ein Verfahren zum Betreiben einer Getriebevorrichtung eines Fahrzeugantriebsstranges mit mehreren reibschlüssigen Schaltelementen und wenigstens einem formschlüssigen Schaltelement die zur Darstellung verschiedener Übersetzungen zu- oder abgeschaltet werden bekannt, wobei zur Durchführung eines angeforderten Übersetzungswechsels ein formschlüssiges Schaltelement zuzuschalten ist. Das Verfahren gibt an, wie eine Zahn-auf-Zahn-Stellung, welche eine Zuschaltung des formschlüssigen Schaltelements behindert, aufzulösen ist.

Dabei ist jedoch zu berücksichtigen, dass formschlüssige Schaltelemente nur nahe ihres Synchronpunktes aus einem geöffneten Betriebszustand, in welchem kein Drehmoment über die formschlüssigen Schaltelemente führbar ist, in ihren geschlossenen Betriebszustand, in dem das gesamte anliegende Drehmoment über die formschlüssigen Schaltelemente führbar ist, umschaltbar sind. Zusätzlich sind in den Kraftfluss einer Getriebevorrichtung zugeschaltete formschlüssige Schaltelemente mit geringen Schaltkräften nur nahe ihres lastfreien Betriebszustandes aus dem Kraftfluss abschaltbar. Sowohl zum Synchronisieren von formschlüssigen Schaltelementen als auch zum Überführen formschlüssiger Schaltelemente in ihren lastfreien Zustand sind im Gegensatz zu reibschlüssigen Schaltelementen zusätzliche konstruktive Einrichtungen erforderlich, um Schaltungen in Getriebevorrichtungen, an welchen wenigstens ein formschlüssiges Schaltelement beteiligt ist, innerhalb gewünschter Schaltzeiten durchführen zu können. Zusätzlich besteht bei den letztbeschriebenen Getriebevorrichtungen, die auch mit formschlüssigen Schaltelementen ausgeführt sind, bei einer Anforderung für einen Abbruch des zuvor ausgelösten Übersetzungswechsels ausgehend von der Ist-Übersetzung in Richtung der Ziel-Übersetzung die Möglichkeit, dass das an der Schaltung beteiligte formschlüssige Schaltelement nicht in den zur Darstellung der Ist-Übersetzung erforderlichen Betriebszustand, d. h. in seinen geöffneten oder in seinen geschlossenen Betriebszustand, beispielsweise auf Grund des anliegenden Drehmomentes überführbar sind.

Bei aus der Praxis bekannten Verfahren zum Betreiben solcher Getriebevorrichtungen wird üblicherweise bei Vorliegen einer Anforderung zum Abbrechen der aktuell durchgeführten Schaltung zurück in die Ist-Übersetzung gewechselt. Dies ist jedoch während Schaltungen, während welchen formschlüssige Schaltelemente zur Darstellung der angeforderten Ziel-Übersetzung zu öffnen oder zu schließen sind, nicht zu jedem Zeitpunkt während der Schaltung möglich, da formschlüssige Schaltelemente beim Schließen aufgrund des Drehmomentaufbaus ab einem gewissen Zeitpunkt nicht mehr geöffnet werden können oder während einer Öffnungsphase nach einem vollständigen Auflösen des Formschlusses im Bereich des formschlüssigen Schaltelementes nicht mehr ohne zusätzliche Synchronisierphase in ihren geschlossenen Betriebszustand überführbar sind. Das bedeutet, dass nach Überschreiten dieser Zeitpunkte, die nachfolgend auch als point-of-no-return bezeichnet werden und für verschiedene Schaltungstypen charakteristisch sind, eine bereits begonnene Schaltung in Richtung der angeforderten Ziel-Übersetzung nicht mehr abgebrochen werden kann ohne die Getriebevorrichtung in einen undefinierten Betriebszustand zu überführen.

Der vorliegenden Erfindung liegt daher die Aufgabe zugrunde, ein Verfahren zum Betreiben einer Getriebevorrichtung eines Fahrzeugantriebsstranges mit mehreren reibschlüssigen Schaltelementen und wenigstens einem formschlüssigen Schaltelement zur Verfügung zu stellen, mit welchem undefinierte Getriebezustände im Bereich einer Getriebevorrichtung bei Vorliegen einer Anforderung zum Abbrechen eines aktuell durchgeführten Übersetzungswechsels ausgehend von einer aktuell in der Getriebevorrichtung eingelegten Ist-Übersetzung in Richtung einer Ziel-Übersetzung vermieden werden.

Erfindungsgemäß wird diese Aufgabe mit einem Verfahren mit den Merkmalen des Patenanspruches 1 gelöst.

Bei dem erfindungsgemäßen Verfahren zum Betreiben einer Getriebevorrichtung eines Fahrzeugantriebsstranges mit mehreren reibschlüssigen Schaltelementen und wenigstens einem formschlüssigen Schaltelement, die zur Darstellung verschiedener Übersetzungen zu- oder abgeschaltet werden, wird bei Vorliegen einer Anforderung für einen Übersetzungswechsel von einer Ist-Übersetzung in Richtung einer Ziel-Übersetzung, zu deren Durchführung das wenigstens eine formschlüssige Schaltelement zuzuschalten ist, und bei einer sich daran anschließenden Anforderung zum Einlegen der Ist-Übersetzung in der Getriebevorrichtung während einer durch die vorherige Anforderung zum Einlegen der Ziel-Übersetzung ausgelösten Schließphase des formschlüssigen Schaltelementes ein aktueller Betriebszustand des formschlüssigen Schaltelementes bestimmt, wobei bei Ermitteln eines aktuellen Betriebszustandes des formschlüssigen Schaltelementes, von dem ausgehend die Schließphase abbrechbar und das formschlüssige Schaltelement abschaltbar ist, das formschlüssige Schaltelement abgeschaltet wird, während bei Ermitteln eines aktuellen Betriebszustandes des formschlüssigen Schaltelementes, von dem ausgehend die Schließphase des formschlüssigen Schaltelementes durchzuführen ist und das formschlüssige Schaltelement zu schließen ist, das formschlüssige Schaltelement zugeschaltet wird und/oder der Kraftfluss in der Getriebevorrichtung unterbrochen wird.

Damit wird auf einfache Art und Weise sicher gestellt, dass während Hoch- oder Rückschaltungen in einer Getriebevorrichtung je nach zeitlichem Fortschritt der angeforderten Schaltung ausgehend von der Ist-Übersetzung in Richtung der angeforderten Ziel-Übersetzung ein Abbruch der angeforderten Schaltung möglich ist und nach Überschreiten des point-of-no-return sinnvollerweise nicht mehr abgebrochen wird. Damit werden mit der erfindungsgemäßen Vorgehensweise undefinierte Getriebezustände im Bereich einer Getriebevorrichtung mit geringem Betätigungsaufwand vermieden.

Wird bei Ermitteln eines aktuellen Betriebszustandes des formschlüssigen Schaltelementes, von dem ausgehend die Schließphase des formschlüssigen Schaltelementes durchzuführen ist und das formschlüssige Schaltelement zu schließen ist, der Kraftfluss im Bereich der Getriebevorrichtung unterbrochen und die Getriebevorrichtung in einen definierten und sicheren Betriebszustand überführt, in dem das formschlüssige Schaltelement in einem im Wesentlichen lastfreien Betriebszustand vorliegt, ist das formschlüssige Schaltelement beispielsweise mit geringen Schaltkräften sicher in den geöffneten Betriebszustand überführbar bzw. führt ein Abschließen eines begonnenen Schließvorgang des formschlüssigen Schaltelementes nicht zu einem undefinierten Betriebszustand einer Getriebevorrichtung.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen.

Es zeigt:
- Fig. 1: ein Radsatzschema einer Getriebevorrichtung;
- Fig. 2: eine tabellarische Schaltlogik der in Fig. 1 gezeigten Getriebevorrichtung; und
- Fig. 3: mehrere Verläufe verschiedener Betriebszustandsparameter der Getriebevorrichtung gemäß Fig. 1 während der Durchführung einer angeforderten Schaltung bei gleichzeitiger Abbruchanforderung der angeforderten Schaltung.

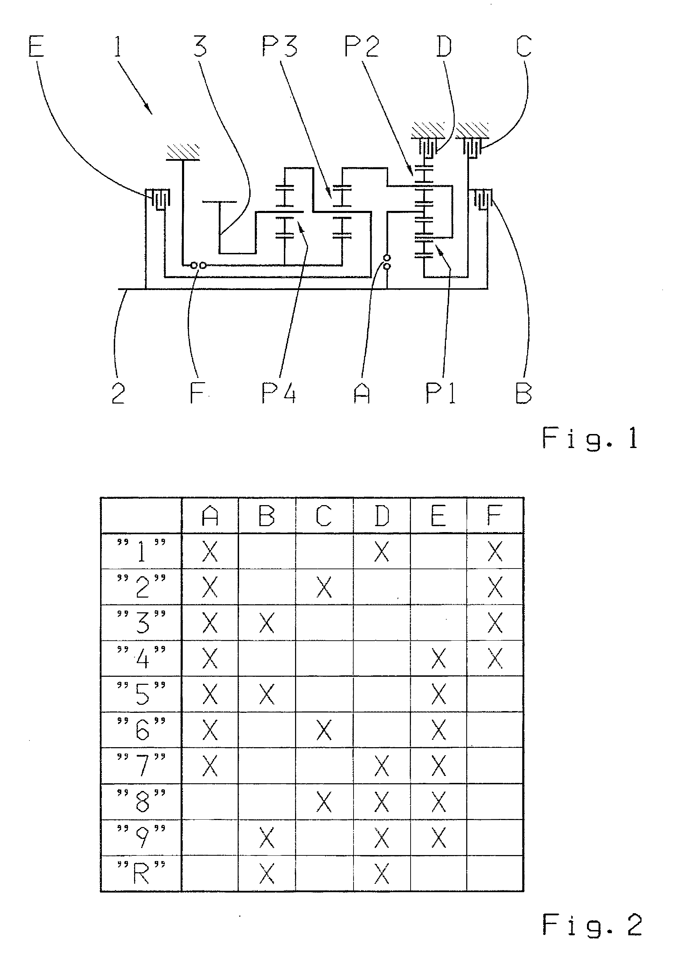

Fig. 1 zeigt ein Räderschema einer Getriebevorrichtung 1 bzw. eines Mehrstufengetriebes, welches grundsätzlich aus der DE 10 2008 000 429 A1 bekannt ist. Die Getriebevorrichtung 1 umfasst eine Antriebswelle 2 und eine Abtriebswelle 3, welche in einem Fahrzeug montierten Zustand mit einem Abtrieb des Fahrzeugs verbunden ist, während die Antriebswelle 2 mit einer Antriebsmaschine wirkverbunden ist.

Darüber hinaus umfasst die Getriebevorrichtung 1 vier Planetenradsätze P1 bis P4, wobei der erste und der zweite Planetenradsatz P1, P2, die vorzugsweise als Minusplanetensätze ausgebildet sind, einen schaltbaren Vorschaltradsatz bilden, während der dritte und der vierte Planetenradsatz P3 und P4 den Hauptradsatz darstellen. Zusätzlich umfasst die Getriebevorrichtung 1 sechs Schaltelemente A bis F, wovon die Schaltelemente C, D und F als Bremsen und die Schaltelemente A, B und E als Schaltkupplungen ausgeführt sind.

Mit den Schaltelementen A bis F ist gemäß der in Fig. 2 näher dargestellten Schaltlogik ein selektives Schalten von neun Vorwärtsgängen "1" bis "9" und einem Rückwärtsgang "R" realisierbar, wobei zum Herstellen eines Kraftflusses in der Getriebevorrichtung 1 jeweils gleichzeitig drei Schaltelemente in einen geschlossenen Betriebszustand zu führen bzw. zu halten sind.

Die Schaltelemente A und F sind vorliegend als formschlüssige Schaltelemente ohne zusätzliche Synchronisierung ausgebildet, um im Betrieb der Getriebevorrichtung 1 im Vergleich zu Getriebevorrichtungen, die nur mit reibschlüssigen Schaltelementen ausgebildet sind, durch geöffnete reibschlüssige Schaltelemente verursachte Schleppmomente zu reduzieren. Da formschlüssige Schaltelemente im Allgemeinen nur innerhalb eines sehr schmalen Differenzdrehzahlbandes um die Synchrondrehzahl aus einem geöffneten Betriebszustand in einen geschlossenen Betriebszustand überführbar sind, wird die Synchronisierung eines zuzuschaltenden formschlüssigen Schaltelementes ohne zusätzliche konstruktive Ausführungen durch entsprechende Betätigung der jeweils an der Schaltung beteiligten Schaltelemente realisiert. Dies gilt sowohl für Zug- als auch für Schubschaltungen, wobei die formschlüssigen Schaltelemente als Klauenkupplungen ausgeführt sein können, welche mit oder ohne zusätzliche Synchronisierung ausgebildet sind.

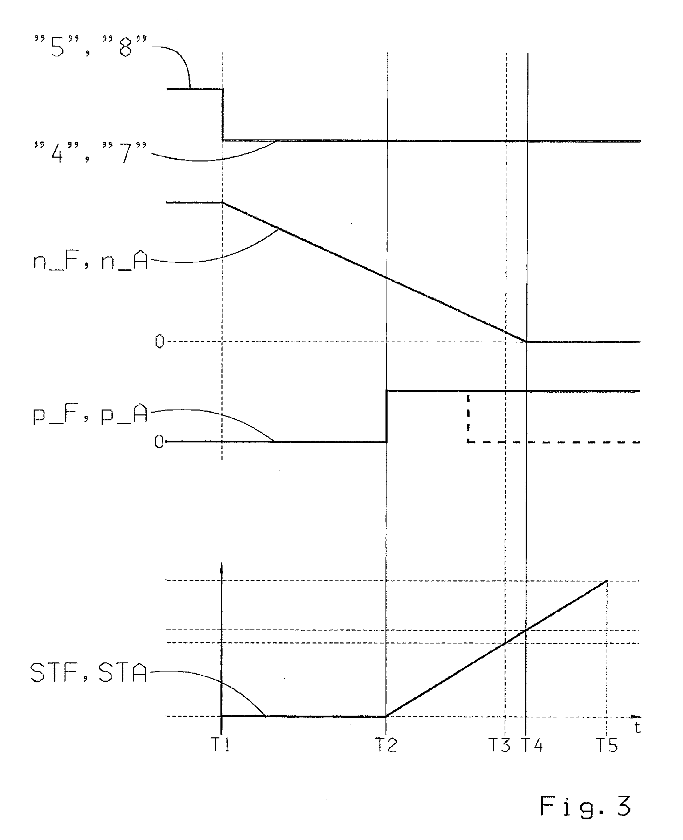

Die Wirkungsweise des erfindungsgemäßen Verfahrens wird anhand der in Fig. 3 über der Zeit t näher dargestellten Betriebszustandsverläufe mehrerer Betriebsparameter der Getriebevorrichtung 1 gemäß Fig. 1 näher erläutert. Das erfindungsgemäße Verfahren ist sowohl für die Überwachung und Betätigung des formschlüssigen Schaltelementes F während eines angeforderten Übersetzungswechsels ausgehend von der fünften Übersetzung "5" in Richtung der vierten Übersetzung "4", zu deren Durchführung das reibschlüssige Schaltelement B abzuschalten ist und das formschlüssige Schaltelement F zuzuschalten ist, als auch für die Überwachung und Betätigung des formschlüssigen Schaltelementes A bei einem angeforderten Übersetzungswechsel ausgehend von der achten Übersetzung "8" in Richtung der siebten Übersetzungsstufe "7" anwendbar, zu deren Durchführung das reibschlüssige Schaltelement C abzuschalten ist und das formschlüssige Schaltelement A zuzuschalten ist.

Zugunsten der Übersichtlichkeit wird die erfindungsgemäße Vorgehensweise nachfolgend im Wesentlichen lediglich für das formschlüssige Schaltelement F näher beschrieben, wobei der vorgestellte Ablauf dem für die Betätigung und die Überwachung des formschlüssigen Schaltelementes A bei einem angeforderten Übersetzungswechsel von der achten Übersetzung "8" in Richtung der siebten Übersetzungsstufe "7" vorgesehenen Ablauf entspricht.

Bis zu einem Zeitpunkt T1 ist in der Getriebevorrichtung 1 die fünfte Übersetzung "5" oder die achte Übersetzung "8" für Vorwärtsfahrt eingelegt. Zum Zeitpunkt T1 ergeht eine Anforderung für einen Übersetzungswechsel ausgehend von der aktuell eingelegten Ist-Übersetzung "5" oder "8" in Richtung der vierten Übersetzung "4" oder der siebten Übersetzung "7" für Vorwärtsfahrt bzw. der Ziel-Übersetzung, wobei hierfür das reibschlüssige Schaltelement B oder das Schaltelement C zu öffnen ist und gleichzeitig das formschlüssige Schaltelement F oder das Schaltelement A aus seinem geöffneten Betriebszustand in seinen geschlossenen Betriebszustand zu überführen ist.

Die jeweils in der Getriebevorrichtung 1 aktuell eingelegte Übersetzung oder die einzulegende Übersetzung ist in Fig. 3 durch die Linie SF oder SA gezeigt, deren Verlauf vor dem Zeitpunkt T1 auf dem Niveau der fünften Übersetzung "5" oder der achten Übersetzung "8" liegt und zum Zeitpunkt T1 sprungförmig auf das Niveau der vierten Übersetzung "4" oder der siebten Übersetzung "7" für Vorwärtsfahrt umspringt und ohne weitere Schaltanforderung in der in Fig. 3 näher dargestellten Art und Weise auf diesem Niveau verbleibt.

Zusätzlich ist ein Verlauf einer Differenzdrehzahl n_F bzw. n_A zwischen den Schaltelementhälften des formschlüssigen Schaltelementes F oder des Schaltelementes A über der Zeit t aufgetragen. Zum Zeitpunkt T1, zu welchem das reibschlüssige Schaltelement B oder das Schaltelementes C noch vollständig geschlossen ist und das formschlüssige Schaltelement F oder das Schaltelement A in vollständig geöffnetem Betriebszustand vorliegt sowie die fünfte Übersetzung "5" oder die achte Übersetzung "8" eingelegt ist, weist die Differenzdrehzahl n_F bzw. n_A ein zur Synchrondrehzahl der aktuell eingelegten Ist-Übersetzung der Getriebeeingangsdrehzahl der Getriebevorrichtung 1 äquivalentes Drehzahlniveau auf.

Ab dem Zeitpunkt T1, zu welchem die Schaltanforderung ausgehend von der Ist-Übersetzung "5" in Richtung der Ziel-Übersetzung "4" vorliegt, wird die Übertragungsfähigkeit des reibschlüssigen Schaltelementes B durch entsprechendes Reduzieren des Betätigungsdruckes verringert, womit die Differenzdrehzahl n_F im Bereich des formschlüssigen Schaltelementes F in Richtung Null absinkt. Zu einem zeitlich auf den Zeitpunkt T1 folgenden weiteren Zeitpunkt T2 wird ein Betätigungsdruck p_F des formschlüssigen Schaltelementes F oder ein Betätigungsdruck p_A des formschlüssigen Schaltelementes A sprungartig von seinem Öffnungsdruckniveau auf ein Schließdruckniveau angehoben, um das formschlüssige Schaltelement F oder das Schaltelement A aus seinem geöffneten Betriebszustand in seinen geschlossenen Betriebszustand entsprechend der vorliegenden Anforderung für den Übersetzungswechsel bzw. die Rückschaltung ausgehend von der fünften Übersetzungsstufe "5" oder der achten Übersetzung "8" in Richtung der vierten Übersetzungsstufe "4" oder der siebten Übersetzung "7" umzusetzen. Die sprungartige Erhöhung des Übersetzungsdruckes p_F oder p_A des formschlüssigen Schaltelementes F oder Schaltelementes A stellt den Beginn einer Schließphase des formschlüssigen Schaltelementes F oder des Schaltelementes A dar, während welcher zwischen den beiden Schaltelementhälften ein Formschluss durch eine Relativbewegung in axialer Richtung zwischen den Schaltelementhälften hergestellt wird.

Die jeweils vorliegende aktuelle Stellung zwischen den beiden Schaltelementhälften des formschlüssigen Schaltelementes F oder des Schaltelementes A wird vorliegend über eine dem formschlüssigen Schaltelement F oder dem formschlüssigen Schaltelement A zugeordnete Positionssensoreinrichtung überwacht, über die jeweils eine aktuelle axiale Position der Schaltelementhälften zueinander bestimmbar ist.

Das Anheben des Betätigungsdruckes p_F bzw. p_A bewirkt das Verschieben einer der Schaltelementhälften des formschlüssigen Schaltelementes F oder A in Richtung der anderen nicht verschiebbar ausgeführten Schaltelementhälfte. Die aktuelle Position der verschiebbar ausgeführten Schaltelementhälfte des formschlüssigen Schaltelementes F oder A wird durch den in Fig. 3 gezeigten Verlauf STF oder STA grafisch wiedergegeben, wobei die verschiebbar ausgeführte Schaltelementhälfte des formschlüssigen Schaltelementes F oder A vor dem Zeitpunkt T2 sich in ihrer ersten Endstellung befindet, die zum vollständig geöffneten Betriebszustand des formschlüssigen Schaltelementes F oder A äquivalent ist. Ab dem Zeitpunkt T2 wird die verschiebbar ausgeführte Schaltelementhälfte des formschlüssigen Schaltelementes F oder A durch den anliegenden Betätigungsdruck p_F oder p_A in Richtung ihres zweiten Endanschlages verschoben, der eine zu dem vollständig geschlossenen Betriebszustand des formschlüssigen Schaltelementes F oder A äquivalente Stellung der verschiebbaren Schaltelementhälfte darstellt.

Zu einem Zeitpunkt T3 befindet sich das formschlüssige Schaltelement F in einem Betriebszustand, von dem ausgehend die Schließphase des formschlüssigen Schaltelementes F nicht mehr abbrechbar ist, ohne im Bereich der Getriebevorrichtung 1 einen undefinierten Betriebszustand zu erzeugen, obwohl ein Formschluss im Bereich des formschlüssigen Schaltelementes F zum Zeitpunkt noch nicht hergestellt ist.

Dies resultiert aus der Tatsache, dass das zum Betätigen der Schaltelemente A bis F vorgesehene hydraulische Betätigungssystem der Getriebevorrichtung 1 systembedingt eine gewisse Reaktionszeit aufweist, bis eine Änderung der Betätigungsstrategie der Schaltelemente umgesetzt wird. Das bedeutet, dass ausgehend von einer Betätigung des formschlüssigen Schaltelementes mit einem in Schließrichtung des formschlüssigen Schaltelementes F wirkenden Betätigungsdruck p_F eine Einstellung des Betätigungsdruckes p_F auf ein Druckniveau, zu dem das formschlüssige Schaltelement F in Öffnungsrichtung geführt wird, erst nach Ablauf einer vorzugsweise temperaturabhängigen Reaktionszeit umgesetzt wird.

Vorliegend weist die verschiebbare Schaltelementhälfte des formschlüssigen Schaltelementes F zum Zeitpunkt T3 in Bezug auf die nicht verschiebbar ausgeführte Schaltelementhälften eine Position auf, von der ausgehend die verschiebbare Schaltelementhälfte mit der nicht verschiebbaren Schaltelementhälfte des formschlüssigen Schaltelementes F trotz einer sprungartigen Absenkung des Betätigungsdruckes p_F vom hydraulischen Betätigungssystem entweder zumindest im Bereich ihrer zugewandten Stirnflächen miteinander in Anlage gebracht wird oder sogar formschlüssig mit dieser in Eingriff geführt wird, was jedoch der Anforderung für den Abbruch der Schließphase des formschlüssigen Schaltelementes, die beispielsweise durch eine Schaltanforderung in Richtung der fünften Übersetzung "5" für Vorwärtsfahrt ausgelöst wird, widerspricht.

Wird die Schaltung dennoch abgebrochen und beispielsweise das zuvor abzuschaltende Schaltelement B nicht geöffnet und wird gleichzeitig im Bereich des zuvor zuzuschaltenden Schaltelementes F aufgrund der Verzögerung in der hydraulischen Betätigung ein derartiger Kontakt zwischen des Schaltelementhälften des formschlüssigen Schaltelementes hergestellt, dass im Bereich des formschlüssigen Schaltelementes F Drehmoment übertragen wird, treten im Bereich der Getriebevorrichtung 1 undefinierte Verspannungszustände auf, die unerwünscht sind und eine ordnungsgemäße Funktionsweise der Getriebevorrichtung unter Umständen beeinträchtigen.

Bei dem erfindungsgemäßen Verfahren ist es zur Vermeidung solcher undefinierter Betriebszustände in der Getriebevorrichtung 1 bei Vorliegen einer Abbruchanforderung für die zuvor angeforderte Rückschaltung ausgehend von der Ist-Übersetzung "5" in Richtung der Ziel-Übersetzung "4" vorgesehen, dass ab Erreichen des Zeitpunktes T3, der in Abhängigkeit der jeweils vorliegenden Betriebstemperatur der Getriebevorrichtung 1 variiert, die angeforderte Schaltung und somit die Schließphase des formschlüssigen Schaltelementes F trotz Abbruchanforderung vollständig durchgeführt und das formschlüssige Schaltelement F in seinen geschlossenen Betriebszustand gebracht wird.

Anschließend besteht die Möglichkeit, wieder eine Hochschaltung ausgehend von der vierten Übersetzungsstufe "4" in Richtung der fünften Übersetzungsstufe "5" durchzuführen, um den durch die Abbruchanforderung gewünschten Betriebszustand in der Getriebevorrichtung 1 herzustellen.

Alternativ oder kumulativ hierzu ist es bei einer Variante des erfindungsgemäßen Verfahrens vorgesehen, dass der Kraftfluss in der Getriebevorrichtung 1 durch Öffnen wenigstens eines der Schaltelemente A oder E bei gleichzeitig geöffnetem Schaltelement B unterbrochen wird, um die Getriebevorrichtung 1 in einen Neutralbetriebszustand, zu dem über die Getriebevorrichtung 1 im Wesentlichen kein Drehmoment von der Antriebswelle 2 in Richtung der Abtriebswelle 3 oder in umgekehrter Richtung leitbar ist, zu überführen, um Verspannungszustände im Bereich der Getriebevorrichtung 1, die einen Fahrkomfort beeinträchtigen, sicher zu vermeiden.

Daran anschließend besteht die Möglichkeit, in der Getriebevorrichtung 1 wieder die fünfte Übersetzungsstufe "5" einzulegen, um den durch die Abbruchanforderung gewünschten Betriebszustand in der Getriebevorrichtung 1 herzustellen.

Liegt vor dem Zeitpunkt T3 eine entsprechende Anforderung für den Abbruch der zuvor angeforderten Rückschaltung von der fünften Übersetzungsstufe "5" in Richtung der vierten Übersetzungsstufe "4" vor, ist die Schließphase des formschlüssigen Schaltelementes F unterbrechbar, ohne einen undefinierten Betriebszustand in der Getriebevorrichtung 1 zu erzeugen.

Zu einem Zeitpunkt T4 weist die verschiebbar ausgeführte Schaltelementhälfte des formschlüssigen Schaltelementes F in Bezug auf die nicht verschiebbar ausgeführte Schaltelementhälfte F eine Position auf, zu der die Schaltelementhälften des formschlüssigen Schaltelementes F ohne formschlüssige Verbindung im Bereich der einander zugewandten Stirnflächen aneinander zum Anliegen kommen. Ausgehend von der Position der verschiebbar ausgeführten Schaltelementhälfte des formschlüssigen Schaltelementes F zum Zeitpunkt T4 führt ein weiteres axiales Verfahren der verschiebbar ausgeführten Schaltelementhälfte in Richtung der nicht verschiebbar ausgeführten Schaltelementhälfte zum Herstellen des Formschlusses zwischen den Schaltelementhälften des formschlüssigen Schaltelementes F, wobei das formschlüssige Schaltelement F zum Zeitpunkt T5, zu welchem die verschiebbar ausgeführte Schaltelementhälfte ihre zum vollständig geschlossenen Betriebszustand des formschlüssigen Schaltelementes F äquivalente zweite Endstellung erreicht, vollständig geschlossen ist.

Der vorliegend zum Zeitpunkt T3 definierte point-of-no-return wird dann für das erfindungsgemäße Verfahren herangezogen, wenn das aktuell über das formschlüssige Schaltelement F geführte Drehmoment nicht bekannt ist, da dann die zum Öffnen des formschlüssigen Schaltelementes F erforderlichen Schaltkräfte ausgehend von einer Zahn-auf-Zahn-Stellung oder ausgehend von einem formschlüssigen Betriebszustand des formschlüssigen Schaltelementes F, zu dem das Drehmoment über einen zumindest teilweise hergestellten Formschluss zwischen den Schaltelementhälften des formschlüssigen Schaltelementes F übertragen wird, nicht ermittelbar sind.

Ist dem formschlüssigen Schaltelement F zusätzlich zur Positionssensoreinrichtung eine Drehmomentsensoreinrichtung zugeordnet, mittels welcher ein aktuell über das formschlüssige Schaltelement F geführtes Drehmoment ermittelbar ist, ist der point-of-no-return des formschlüssigen Schaltelementes in Abhängigkeit des aktuell über das formschlüssige Schaltelement F geführten Drehmomentes variierbar. So besteht beispielsweise bei geringen über das formschlüssige Schaltelement F geführten Drehmomentwerten die Möglichkeit, das formschlüssige Schaltelement F selbst bei hergestelltem Formschluss mit geringen Schaltkräften in den geöffneten Betriebszustand zu überführen, ohne undefinierte Betriebszustände im Bereich der Getriebevorrichtung 1 zu erzeugen.

Ab einer Drehmomentschwelle des aktuell über das formschlüssige Schaltelement F geführten Drehmomentes ist das formschlüssige Schaltelement F nicht mehr mit der gewünschten Sicherheit in seinen geöffneten Betriebszustand zu überführen, weshalb dann der point-of-no-return zeitlich vor einem point-of-no-return liegt, der für über das formschlüssige Schaltelement F aktuell geführte Drehmomentwerte unterhalb der Drehmomentschwelle ermittelt wird.

Ist dem formschlüssigen Schaltelement F lediglich eine Drehmomentsensoreinrichtung zugeordnet, über die das aktuell über das formschlüssige Schaltelement F geführte Drehmoment ermittelbar ist, wird der aktuelle Betriebszustand des formschlüssigen Schaltelementes F in Abhängigkeit des aktuell über das formschlüssige Schaltelement F geführten Drehmomentes ermittelt und die angeforderte Schaltung ausgehend von der fünften Übersetzung "5" in Richtung der vierten Übersetzung "4" abgebrochen, wenn der aktuell ermittelte Drehmomentwert kleiner als eine definierte Drehmomentschwelle ist. Im Gegensatz dazu wird die angeforderte Schaltung ausgehend von der Ist-Übersetzung "5" in Richtung der Ziel-Übersetzung "4" bei Ermitteln eines aktuell über das formschlüssige Schaltelement F geführten Drehmomentes größer oder gleich der definierten Drehmomentschwelle durchgeführt und/oder der Kraftfluss im Bereich der Getriebevorrichtung 1 vorzugsweise durch Abschalten bzw. Öffnen der geschlossenen Schaltelemente A und E sowie B unterbrochen und die Getriebevorrichtung 1 in den Neutralbetriebszustand überführt. Dabei ist die Drehmomentschwelle bei einer bevorzugten Variante des erfindungsgemäßen Verfahrens im Wesentlichen wenigstens annähernd gleich Null.

Alternativ zu den vorbeschriebenen Möglichkeiten zur Bestimmung des point-of-no-returns des formschlüssigen Schaltelementes F besteht auch die Möglichkeit, den point-of-no-return über eine dem formschlüssigen Schaltelement F zugeordnete Drucksensoreinrichtung zu bestimmen, mittels der der aktuell am formschlüssigen Schaltelement F anliegende Betätigungsdruck p_F ermittelbar ist, wobei der aktuelle Betriebszustand des formschlüssigen Schaltelementes F in Abhängigkeit des aktuell vorliegenden Betätigungsdruckes p_F bestimmt wird.

Die zum Zeitpunkt T1 angeforderte Schaltung in Richtung der Ziel-Übersetzung "4" wird bei Ermitteln eines Druckwertes des Betätigungsdruckes p_F oberhalb einer definierten Druckschwelle durchgeführt, während die angeforderte Schaltung in Richtung der Ziel-Übersetzung "4" bei Vorliegen eines Betätigungsdruckes kleiner oder gleich der definierten Druckschwelle abgebrochen wird. Da der Betätigungsdruck p_F vorliegend entweder gleich Null ist oder das Schließdruckniveau des formschlüssigen Schaltelementes F aufweist, wird der point-of-no-return über die Drucksensoreinrichtung generell ab dem Zeitpunkt festgestellt, ab dem das formschlüssige Schaltelement F mit Betätigungsdruck beaufschlagt wird. Das bedeutet, dass die Druckschwelle im Wesentlichen gleich Null ist und der angeforderte Abbruch der Schaltung in Richtung der Ziel-Übersetzung "4" bereits zum Zeitpunkt T2 nicht mehr erfolgt. Somit liegt der point-of-no-return bei einer Verwendung der Drucksensoreinrichtung im Vergleich zur Ermittlung über die Positionssensoreinrichtung und/oder die Drehmomentsensoreinrichtung zeitlich sehr viel früher.

Wiederum alternativ hierzu wird der point-of-no-return bei einer weiteren Variante des erfindungemäßen Verfahrens über eine Drehzahlsensoreinrichtung bestimmt, mittels der eine Differenzdrehzahl zwischen den Schaltelementhälften des formschlüssigen Schaltelementes F ermittelbar ist, wobei der aktuelle Betriebszustand des formschlüssigen Schaltelementes F und der point-of-no-return dann in Abhängigkeit der aktuell vorliegenden Differenzdrehzahl bestimmt wird.

Die zum Zeitpunkt T1 angeforderte Schaltung in Richtung der Ziel-Übersetzung "4" wird bei Vorliegen bzw. Ermitteln einer aktuellen Differenzdrehzahl zwischen den Schaltelementhälften größer als eine definierte Drehzahlschwelle der Differenzdrehzahl zwischen den Schaltelementhälften abgebrochen, während die angeforderte Schaltung in Richtung der Ziel-Übersetzung "4" bei Vorliegen einer aktuellen Differenzdrehzahl zwischen den Schaltelementhälften kleiner oder gleich der definierten Drehzahlschwelle der Differenzdrehzahl zwischen den Schaltelementhälften durchgeführt wird.

Bei einer bevorzugten Variante des erfindungsgemäßen Verfahrens ist die Drehzahlschwelle im Wesentlichen wenigstens annähernd gleich Null, wobei der ermittelte point-of-no-return wieder verworfen wird, wenn das formschlüssige Schaltelement F einen Betriebszustandsverlauf aufweist, zu dem die Differenzdrehzahl zwischen den Schaltelementhälften des formschlüssigen Schaltelementes F wenigstens annähernd gleich Null ist, aber der Formschluss im Bereich des formschlüssigen Schaltelementes F noch nicht hergestellt ist. Ein solcher Betriebszustandsverlauf tritt dann auf, wenn im Bereich des formschlüssigen Schaltelementes F ein so genannter Nulldurchgang aufgrund einer entsprechenden Betätigung des abzuschaltenden reibschlüssigen Schaltelementes B vorliegt.

In Abhängigkeit des jeweils vordefinierten Betrages der Drehzahlschwelle der Differenzdrehzahl wird der point-of-no-return in einem um den Nulldurchgang des formschlüssigen Schaltelementes F liegenden Drehzahlfenster ermittelt. Wird während eines sich an den vorher durchgeführten Abfrageschritt anschließenden weiteren Abfrageschrittes eine Differenzdrehzahl größer der Drehzahlschwelle ermittelt, wird der zuvor bestimmte point-of-no-return wieder zurückgesetzt und ein aktueller Betriebszustand des formschlüssigen Schaltelementes F ermittelt, von dem ausgehend die zum Zeitpunkt T1 angeforderte Schaltung in Richtung der Ziel-Übersetzung "4" abgebrochen werden kann, ohne einen undefinierten Betriebszustand im Bereich der Getriebevorrichtung 1 zu erzeugen.

Die vorbeschriebenen Varianten des erfindungsgemäßen Verfahrens sind auch zur Bestimmung des point-of-no-returns von formschlüssigen Schaltelementen geeignet, bei welchen beide Schaltelementhälften verfahrbar ausgeführt sind.

### Bezugszeichen

- 1: Getriebevorrichtung
- 2: Antriebswelle
- 3: Abtriebswelle
- "1" bis "9": Übersetzung für Vorwärtsfahrt
- A bis F: Schaltelement
- n_A, n_F: Differenzdrehzahl des formschlüssigen Schaltelementes A oder F
- p_A, p_F: Betätigungsdruck
- P1 bis P4: Planetenradsatz
- "R": Übersetzung für Rückwärtsfahrt
- SA, SF: Verlauf der Schaltanforderung
- STA, STF: Verlauf der Position der verschiebbar ausgeführten Schaltelementhälfte des formschlüssigen Schaltelementes A oder F
- t: Zeit
- T1 bis T5: diskreter Zeitpunkt

## Patentansprüche

1. Verfahren zum Betreiben einer Getriebevorrichtung (1) eines Fahrzeugantriebsstranges mit mehreren reibschlüssigen Schaltelementen (B, C, D, E) und wenigstens einem formschlüssigen Schaltelement (A, F), die zur Darstellung verschiedener Übersetzungen ("1" bis "R") zu- oder abgeschaltet werden, bei Vorliegen einer Anforderung für einen Übersetzungswechsel von einer Ist-Übersetzung ("5"; "8") in Richtung einer Ziel-Übersetzung ("4"; "7"), wobei zur Durchführung des angeforderten Übersetzungswechsels das wenigstens eine formschlüssige Schaltelement (F; A) zuzuschalten ist, **dadurch gekennzeichnet, dass** bei Vorliegen einer Anforderung zum Einlegen der Ist-Übersetzung ("5"; "8") in der Getriebevorrichtung (1) während einer durch die vorherige Anforderung zum Einlegen der Ziel-Übersetzung ("4"; "7") ausgelösten Schließphase des formschlüssigen Schaltelementes (F; A), ein aktueller Betriebszustand des formschlüssigen Schaltelementes (F; A) bestimmt wird, wobei bei Ermitteln eines aktuellen Betriebszustandes des formschlüssigen Schaltelementes (F; A), von dem ausgehend die Schließphase abbrechbar und das formschlüssige Schaltelement (F; A) abschaltbar ist, das formschlüssige Schaltelement (F; A) abgeschaltet wird, während bei Ermitteln eines aktuellen Betriebszustandes des formschlüssigen Schaltelementes (F; A), von dem ausgehend die Schließphase des formschlüssigen Schaltelementes (F; A) durchzuführen ist und das formschlüssige Schaltelement (F; A) zu schließen ist, das formschlüssige Schaltelement (F; A) zugeschaltet wird und/oder der Kraftfluss in der Getriebevorrichtung (1) unterbrochen wird.

2. Verfahren nach Anspruch 1, **dadurch gekennzeichnet, dass** während der Schließphase des formschlüssigen Schaltelementes (F; A) zwischen zwei Schaltelementhälften des formschlüssigen Schaltelementes (F; A) ein Formschluss durch eine Relativbewegung in axialer Richtung zwischen den Schaltelementhälften hergestellt wird und der aktuelle Betriebszustand des formschlüssigen Schaltelementes (F; A) mittels einer Positionssensoreinrichtung bestimmt wird, über die jeweils eine aktuelle axiale Position der Schaltelementhälften zueinander ermittelbar ist.

3. Verfahren nach Anspruch 2, **dadurch gekennzeichnet, dass** die angeforderte Schaltung in Richtung der Ziel-Übersetzung ("4"; "7") vor Erreichen einer definierten axialen Stellung zwischen den Schaltelementhälften abgebrochen wird.

4. Verfahren nach Anspruch 2 oder 3, **dadurch gekennzeichnet, dass** die angeforderte Schaltung in Richtung der Ziel-Übersetzung ("4"; "7") bei Erreichen einer definierten axialen Stellung zwischen den Schaltelementhälften durchgeführt wird.

5. Verfahren nach einem der Ansprüche 1 bis 4, **dadurch gekennzeichnet, dass** dem formschlüssigen Schaltelement (F; A) eine Drehmomentsensoreinrichtung zugeordnet ist, mittels der ein über das formschlüssige Schaltelement (F; A) aktuell geführtes Drehmoment ermittelbar ist, wobei der aktuelle Betriebszustand des formschlüssigen Schaltelementes (F; A) in Abhängigkeit des aktuell übertragenen Drehmomentes bestimmt wird.

6. Verfahren nach Anspruch 5, **dadurch gekennzeichnet, dass** die angeforderte Schaltung in Richtung der Ziel-Übersetzung ("4"; "7") bei Ermitteln eines aktuell über das formschlüssige Schaltelement (F; A) geführten Drehmomentes kleiner als eine definierte Drehmomentschwelle abgebrochen wird.

7. Verfahren nach Anspruch 6, **dadurch gekennzeichnet, dass** die angeforderte Schaltung in Richtung der Ziel-Übersetzung ("4"; "7") bei Ermitteln eines aktuell über das formschlüssige Schaltelement (F; A) geführten Drehmomentes größer oder gleich der definierten Drehmomentschwelle durchgeführt wird.

8. Verfahren nach einem der Ansprüche 1 bis 7, **dadurch gekennzeichnet, dass** dem formschlüssigen Schaltelement (F; A) eine Drehzahlsensoreinrichtung zugeordnet ist, mittels der eine Differenzdrehzahl (n_F) zwischen den Schaltelementhälften des formschlüssigen Schaltelementes (F; A) ermittelbar ist, wobei der aktuelle Betriebszustand des formschlüssigen Schaltelementes (F; A) in Abhängigkeit der aktuell vorliegenden Differenzdrehzahl (n_F) bestimmt wird.

9. Verfahren nach Anspruch 8, **dadurch gekennzeichnet, dass** die angeforderte Schaltung in Richtung der Ziel-Übersetzung ("4"; "7") bei Vorliegen einer aktuellen Differenzdrehzahl (n_F) zwischen den Schaltelementhälften größer als eine definierte Drehzahlschwelle der Differenzdrehzahl (n_F) zwischen den Schaltelementhälften abgebrochen wird.

10. Verfahren nach Anspruch 9, **dadurch gekennzeichnet, dass** die angeforderte Schaltung in Richtung der Ziel-Übersetzung ("4"; "7") bei Vorliegen einer aktuellen Differenzdrehzahl (n_F) zwischen den Schaltelementhälften kleiner oder gleich der definierten Drehzahlschwelle der Differenzdrehzahl (n_F) zwischen den Schaltelementhälften durchgeführt wird.

11. Getriebevorrichtung nach einem der Ansprüche 1 bis 10, **dadurch gekennzeichnet, dass** dem formschlüssigen Schaltelement (F; A) eine Drucksensoreinrichtung zugeordnet ist, mittels der ein aktuell am formschlüssigen Schaltelement (F; A) anliegender Betätigungsdruck (p_F) ermittelbar ist, wobei der aktuelle Betriebszustand des formschlüssigen Schaltelementes (F; A) in Abhängigkeit des aktuell vorliegenden Betätigungsdruckes (p_F) bestimmt wird.

12. Verfahren nach Anspruch 11, **dadurch gekennzeichnet, dass** die angeforderte Schaltung in Richtung der Ziel-Übersetzung ("4"; "7") oberhalb einer definierten Druckschwelle des Betätigungsdruckes (p_F) des formschlüssigen Schaltelementes (F; A) durchgeführt wird.

13. Verfahren nach Anspruch 12, **dadurch gekennzeichnet, dass** die angeforderte Schaltung in Richtung der Ziel-Übersetzung ("4"; "7") bei Vorliegen eines Betätigungsdruckes (p_F) kleiner oder gleich der definierten Druckschwelle abgebrochen wird.

## Claims

1. Method for the operation of a transmission device (1) in a vehicle drive train with a plurality of frictional shift elements (B, C, D, E) and with at least one positive shift element (A, F) which are connected or disconnected in order to provide various step-up ratios ("1" to "R") when there is a requirement for a change of step-up ratio from an actual step-up ratio ("5"; "8") in the direction of a target step-up ratio ("4"; "7"), the at least one positive shift element (F; A) having to be connected in order to carry out the required step-up ratio change, **characterized in that**, when there is a requirement for selecting the actual step-up ratio ("5"; "8") in the transmission device (1) during a closing phase, triggered by the previous requirement for selecting the target step-up ratio ("4"; "7"), of the positive shift element (F; A) a current operating state of the positive shift element (F; A) is determined, wherein, when a current operating state of the positive shift element (F; A), from which the closing phase can be discontinued and the positive shift element (F; A) can be disconnected, is determined, the positive shift element (F; A) is disconnected, while, when a current operating state of the positive shift element (F; A), from which the closing phase of the positive shift element (F; A) is to be carried out and the positive shift element (F; A) is to be closed, is determined, the positive shift element (F; A) is connected and/or the force flux in the transmission device (1) is interrupted.

2. Method according to Claim 1, **characterized in that**, during the closing phase of the positive shift element (F; A), a positive connection is made between two shift-element halves of the positive shift element (F; A) by means of a relative movement in the axial direction between the shift-element halves, and the current operating state of positive shift element (F; A) is determined by means of a position sensor device, via which in each case a current axial position of the shift-element halves with respect to one another can be determined.

3. Method according to Claim 2, **characterized in that** the required shift in the direction of the target step-up ratio ("4"; "7") is discontinued before a defined axial position between the shift-element halves is reached.

4. Method according to Claim 2 or 3, **characterized in that** the required shift in the direction of the target step-up ratio ("4"; "7") is carried out when a defined axial position between the shift-element halves is reached.

5. Method according to one of Claims 1 to 4, **characterized in that** the positive shift element (F; A) is assigned a torque sensor device, by means of which a torque currently routed via the positive shift element (F; A) can be determined, the current operating state of the positive shift element (F; A) being determined as a function of the currently transmitted torque.

6. Method according to Claim 5, **characterized in that** the required shift in the direction of the target step-up ratio ("4"; "7") is discontinued when a torque currently routed via the positive shift element (F; A) is determined which is lower than a defined torque threshold.

7. Method according to Claim 6, **characterized in that** the required shift in the direction of the target step-up ratio ("4"; "7") is carried out when a torque currently routed by the positive shift element (F; A) is determined which is higher than or equal to the defined torque threshold.

8. Method according to one of Claims 1 to 7, **characterized in that** the positive shift element (F; A) is assigned a rotational-speed sensor device, by means of which a differential rotational speed (n_F) between the shift-element halves of the positive shift element (F; A) can be determined, the current operating state of the positive shift element (F; A) being determined as a function of the currently prevailing differential rotational speed (n_F).

9. Method according to Claim 8, **characterized in that** the required shift in the direction of the target step-up ratio ("4"; "7") is discontinued in the presence of a current differential rotational speed (n_F) between the shift-element halves which is higher than a defined rotational-speed threshold of the differential rotational speed (n_F) between the shift-element halves.

10. Method according to Claim 9, **characterized in that** the required shift in the direction of the target step-up ratio ("4"; "7") is carried out in the presence of a current differential rotational speed (n_F) between the shift-element halves which is lower than or equal to the defined rotational speed-threshold of the differential rotational speed (n_F) between the shift-element halves.

11. Transmission device according to one of Claims 1 to 10, **characterized in that** the positive shift element (F; A) is assigned a pressure sensor device, by means of which an actuation pressure (p_F) currently prevailing at the positive shift element (F; A) can be determined, the current operating state of the positive shift element (F; A) being determined as a function of the currently prevailing actuation pressure (p_F).

12. Method according to Claim 11, **characterized in that** the required shift in the direction of the target step-up ratio ("4"; "7") is carried out above a defined pressure threshold of the actuation pressure (p_F) of the positive shift element (F; A).

13. Method according to Claim 12, **characterized in that** the required shift in the direction of the target step-up ratio ("4"; "7") is discontinued in the presence of an actuation pressure (p_F) lower than or equal to the defined pressure threshold.

## Revendications

1. Procédé pour faire fonctionner un dispositif de transmission (1) d'une chaîne cinématique d'un véhicule comprenant plusieurs éléments de changement de vitesse à engagement par friction (B, C, D, E) et au moins un élément de changement de vitesse à engagement positif (A, F) qui sont enclenchés ou désenclenchés pour réaliser différents rapports de démultiplication ("1" à "R"), en présence d'un ordre de changement de rapport de démultiplication d'un rapport de démultiplication actuel ("5" ; "8") dans la direction d'un rapport de démultiplication cible ("4" ; "7"), l'au moins un élément de changement de vitesse à engagement positif (F ; A) devant être enclenché pour réaliser le changement de rapport de démultiplication demandé, **caractérisé en ce que**, en présence d'un ordre d'enclenchement du rapport de démultiplication actuel ("5" ; "8") dans le dispositif de transmission (1), pendant une phase de fermeture de l'élément de changement de vitesse à engagement positif (F ; A) déclenchée par l'ordre précédent d'enclenchement du rapport de démultiplication cible ("4" ; "7"), un état de fonctionnement actuel de l'élément de changement de vitesse à engagement positif (F ; A) est déterminé, lors de la détermination d'un état de fonctionnement actuel de l'élément de changement de vitesse à engagement positif (F ; A), à partir duquel la phase de fermeture peut être interrompue et l'élément de changement de vitesse à engagement positif (F ; A) peut être désenclenché, l'élément de changement de vitesse à engagement positif (F ; A) étant désenclenché tandis que lors de la détermination d'un état de fonctionnement actuel de l'élément de changement de vitesse à engagement positif (F ; A), à partir duquel la phase de fermeture de l'élément de changement de vitesse à engagement positif (F ; A) doit être réalisée et l'élément de changement de vitesse à engagement positif (F ; A) doit être fermé, l'élément de changement de vitesse à engagement positif (F ; A) étant enclenché et/ou le flux de forces dans le dispositif de transmission (1) étant interrompu.

2. Procédé selon la revendication 1, **caractérisé en ce que** pendant la phase de fermeture de l'élément de changement de vitesse à engagement positif (F ; A) entre deux moitiés d'élément de changement de vitesse de l'élément de changement de vitesse à engagement positif (F ; A) s'établit un engagement positif par un mouvement relatif dans la direction axiale entre les moitiés d'élément de changement de vitesse, et l'état de fonctionnement actuel de l'élément de changement de vitesse à engagement positif (F ; A) est déterminé au moyen d'un dispositif de capteur de position, par le biais duquel une position axiale actuelle des moitiés d'élément de changement de vitesse l'une par rapport à l'autre peut à chaque fois être déterminée.

3. Procédé selon la revendication 2, **caractérisé en ce que** le changement de vitesse demandé dans la direction du rapport de démultiplication cible ("4" ; "7") est interrompu avant l'obtention d'une position axiale définie entre les moitiés d'élément de changement de vitesse.

4. Procédé selon la revendication 2 ou 3, **caractérisé en ce que** le changement de vitesse demandé dans la direction du rapport de démultiplication cible ("4" ; "7") est réalisé lors de l'obtention d'une position axiale définie entre les moitiés d'élément de changement de vitesse.

5. Procédé selon l'une quelconque des revendications 1 à 4, **caractérisé en ce qu'**un dispositif de capteur de couple est associé à l'élément de changement de vitesse à engagement positif (F ; A), au moyen duquel dispositif de capteur de couple un couple actuellement guidé par le biais de l'élément de changement de vitesse à engagement positif (F ; A) peut être déterminé, l'état de fonctionnement actuel de l'élément de changement de vitesse à engagement positif (F ; A) étant déterminé en fonction du couple transmis actuellement.

6. Procédé selon la revendication 5, **caractérisé en ce que** le changement de vitesse demandé dans la direction du rapport de démultiplication cible ("4" ; "7") est interrompu lors de la détermination qu'un couple guidé actuellement par le biais de l'élément de changement de vitesse à engagement positif (F ; A) est inférieur à un seuil de couple défini.

7. Procédé selon la revendication 6, **caractérisé en ce que** le changement de vitesse demandé dans la direction du rapport de démultiplication cible ("4" ; "7") est réalisé lors de la détermination qu'un couple guidé actuellement par le biais de l'élément de changement de vitesse à engagement positif (F ; A) est supérieur ou égal au seuil de couple défini.

8. Procédé selon l'une quelconque des revendications 1 à 7, **caractérisé en ce qu'**un dispositif de capteur de vitesse de rotation est associé à l'élément de changement de vitesse à engagement positif (F ; A), au moyen duquel dispositif de capteur de vitesse de rotation une différence de vitesse de rotation (n_F) entre les moitiés d'élément de changement de vitesse de l'élément de changement de vitesse à engagement positif (F ; A) peut être déterminée, l'état de fonctionnement actuel de l'élément de changement de vitesse à engagement positif (F ; A) étant déterminé en fonction de la différence de vitesse de rotation (n_F) actuellement existante.

9. Procédé selon la revendication 8, **caractérisé en ce que** le changement de vitesse demandé dans la direction du rapport de démultiplication cible ("4" ; "7") est interrompu en présence d'une différence de vitesse de rotation actuelle (n_F) entre les moitiés d'élément de changement de vitesse qui est supérieure à un seuil de vitesse de rotation défini de la différence de vitesse de rotation (n_F) entre les moitiés d'élément de changement de vitesse.

10. Procédé selon la revendication 9, **caractérisé en ce que** le changement de vitesse demandé dans la direction du rapport de démultiplication cible ("4" ; "7") est réalisé en présence d'une différence de vitesse de rotation actuelle (n_F) entre les moitiés d'élément de changement de vitesse qui est inférieure ou égale au seuil de vitesse de rotation défini de la différence de vitesse de rotation (n_F) entre les moitiés d'élément de changement de vitesse.

11. Dispositif de transmission selon l'une quelconque des revendications 1 à 10, **caractérisé en ce qu'**un dispositif de capteur de pression est associé à l'élément de changement de vitesse à engagement positif (F ; A), au moyen duquel dispositif de capteur de pression une pression d'actionnement (p_F) s'appliquant actuellement à l'élément de changement de vitesse à engagement positif (F ; A) peut être déterminée, l'état de fonctionnement actuel de l'élément de changement de vitesse à engagement positif (F ; A) étant déterminé en fonction de la pression d'actionnement (p_F) actuellement existante.

12. Procédé selon la revendication 11, **caractérisé en ce que** le changement de vitesse demandé dans la direction du rapport de démultiplication cible ("4" ; "7") est réalisé au-dessus d'un seuil de pression défini de la pression d'actionnement (p_F) de l'élément de changement de vitesse à engagement positif (F ; A).

13. Procédé selon la revendication 12, **caractérisé en ce que** le changement de vitesse demandé dans la direction du rapport de démultiplication cible ("4" ; "7") est interrompu en présence d'une pression d'actionnement (p_F) qui est inférieure ou égale au seuil de pression défini.
